# EUROPEAN PATENT APPLICATION

(11) **EP 2 437 467 A2**
(43) Date of publication of application: **04.04.2012**
(21) Application number: 11008036.3
(22) Date of filing: 04.10.2011
(51) Int. Cl.: H04L 29/08, H04W 4/02

(54) **Method of handling zone based service procedure**

(30) Priority: 04.10.2010 US 389396 P
(71) Applicant: HTC Corporation, Taoyuan City Taoyuan County (TW)
(72) Inventor: Yang, Ju-Ting, Taoyuan City Taoyuan County 330 (TW); Chien, Ho-Sung, Taoyuan City Taoyuan County 330 (TW)
(74) Representative: Emde, Eric

(57) **Abstract**

A method of handling zone based service procedure for a PN gateway in a wireless communication system is disclosed. The method comprises performing a periodical search in a zone; sending a service description advertisement to a PN entity (PNE) when the PN entity or a service is newly found in the zone; and performing zone information synchronization.

## Description

### Cross Reference To Related Applications

This application claims the benefit of U.S. Provisional Application No. 61/389, 396 filed on Oct 04, 2010 and entitled "ZONE BASED SEARCH FLOW AND ZONE INFORMATION SYNCHRONIZATION", the contents of which are incorporated herein.

### Background of the Invention

### 1. Field of the Invention

The application relates to a method and a related communication device used in a wireless communication system and related communication device, and more particularly, to a method of handling zone based service procedure in a wireless communication system and related communication device.

### 2. Description of the Prior Art

Open Mobile Alliance (OMA) is the focal point for the development of mobile service enabler specifications, which support the creation of interoperable end-to-end mobile services. OMA drives service enabler architectures and open enabler interfaces that are independent of the underlying wireless networks and platforms. OMA creates interoperable mobile data service enablers that work across devices, service providers, operators, networks, and geography. Toward that end, OMA will develop test specifications, encourage third party tool development, and conduct test activities that allow vendors to test their implementations.

Open Mobile Alliance (OMA) is the focal point for the development of mobile service enabler specifications, which support the creation of interoperable end-to-end mobile services. OMA drives service enabler architectures and open enabler interfaces that are independent of the underlying wireless networks and platforms. OMA creates interoperable mobile data service enablers that work across devices, service providers, operators, networks, and geography. Toward that end, OMA will develop test specifications, encourage third party tool development, and conduct test activities that allow vendors to test their implementations.

In OMA (Open Mobile Alliance) CD (Content Delivery)-CPNS (Converged Personal Network Service) protocol specification. CPNS Server, Personal Network Gateway (PN GW), and Personal Network Entities PNE (s) constitute the basic architecture of CPNS. The CPNS server is an entity of CPNS enabler that replies to requests from the PN-GW and ensures that the appropriate application is selected and appropriate content is provided to the PNE (s). The PN-GW serves as an intermediary entity between the PNE (s) and other networks that forwards the requests from the PNE (s) to the other networks and the other way around. The PN-GW can be a mobile phone, or an IP-enabled set-top box. The PNE(s) are PN entities that are connected to the PN-GW and between each other and are used for rendering the content received from the PN-GW or from each other. The PNE can be a mobile phone, a PC, a music player, car navigation system or an IP-enabled set-top box. A CPNS user may own a number of devices such as a mobile phone, a PC, a music player, and an IP-enabled set-top box. These devices construct an "Extended Personal Area Network" which is mentioned in OMA-RD-CPNS-V1_0-20091117-C.

Different from normal PN GW, the concept of Zone PN GW is proposed to provide better service publication and utility. Zone in CPNS is a specific geographic area depending on the signaling capacities of physical bearer used or on the intention of the service provider or users. The concept of the Zone PN GW is that this Zone PN GW searches its zone regularly (periodically) to find out if some PNE which had been located outside of PN enters in. Then the Zone PN GW broadcasts and/or unicasts the message advertising the existence of Zone PN GW and requesting PNE(s) to respond when received.

Currently there is no overall detailed flow or procedures described to carry out zone based service in CPNS technical specification. Besides, a PNE needs to get latest zone information, such as zone capacity, zone characteristics, and zone members for several possible scenarios listed below.
1. A PNE may be in several zones simultaneously (e.g. overlaps of geographic areas). It may want to choose which zone(s) it wants to reside in, and which zone(s) it doesn't want to reside in.
2. A PNE may want to aware of user/ device identity of other PNEs in the zone(s) it resides in.

However, with current available methods, a PNE is not able to get up-to-date zone information.

### Summary of the Invention

A method of handling zone based service procedure for a personal network (PN) gateway in a wireless communication system is provided.

A method of handling zone based service procedure for a PN gateway in a wireless communication system is disclosed. The method comprises performing a periodical search in a zone; sending a service description advertisement to a PN entity (PNE) when the PN entity or a service is newly found in the zone; and performing zone information synchronization.

A method of handling zone based service procedure for a PNE in a wireless communication system is disclosed. The method comprises receiving a service description advertisement from a PN GW; and performing zone information synchronization.

A communication device for handling zone based service procedure in a wireless communication system is disclosed. The communication device comprises means for performing a periodical search in a zone; means for sending a service description advertisement to a PNE when the PN entity or a service is newly found in the zone; and means for performing zone information synchronization.

A communication device for handling zone based service procedure in a wireless communication system is disclosed. The communication device comprises means for receiving a service description advertisement from a PN GW; and means for performing zone information synchronization.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of an exemplary personal network.

FIG.2 is a schematic diagram of an exemplary communication device.

FIGs.3A and 3B are flow charts of exemplary processes.

FIG.4 is a flow chart of an exemplary process.

FIGs.5 and 6 are exemplary sequence diagrams.

### Detailed Description

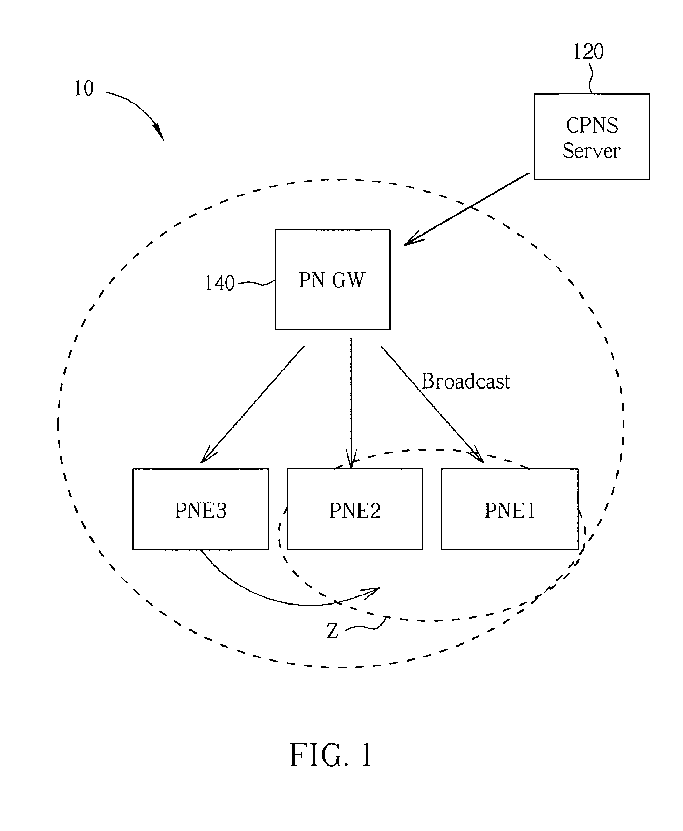

Please refer to FIG. 1, which is a schematic diagram of an exemplary personal network 10. The personal network 10 comprises a converged personal network services (CPNS) server 120, a personal network gateway (PN GW) 140 and personal network entities (PNEs) PNE1, PNE2 and PNE3 (for simplicity, only three PNEs are shown in FIG.1, but not limited herein). The CPNS server 120 can provide a zone-based service in a zone Z. The zone Z is a specific geographic area depending on the signaling capacities of physical bearer used or on the intention of a service provider or user. The PN GW 140 can be referred as to a zone personal network gateway, informing PNEs PNE1,PNE2 and PNE3 of the existence of the PN GW 140 via a broadcast message. Preferably, the PN GW 140 could be a mobile device, or an IP-enabled set-top box. In the zone Z, the PNEs PNE1 and PNE2 have been inside the zone Z for a while. The PNE PNE3 was just entering the zone Z from other zones. The PNE1, PNE2 and PNE3 may be referred to as a mobile device, a PC, a music player, car navigation system or an IP-enabled set-top box. In other words, a mobile device can function as a PNE or a PN GW, depending on user's demand.

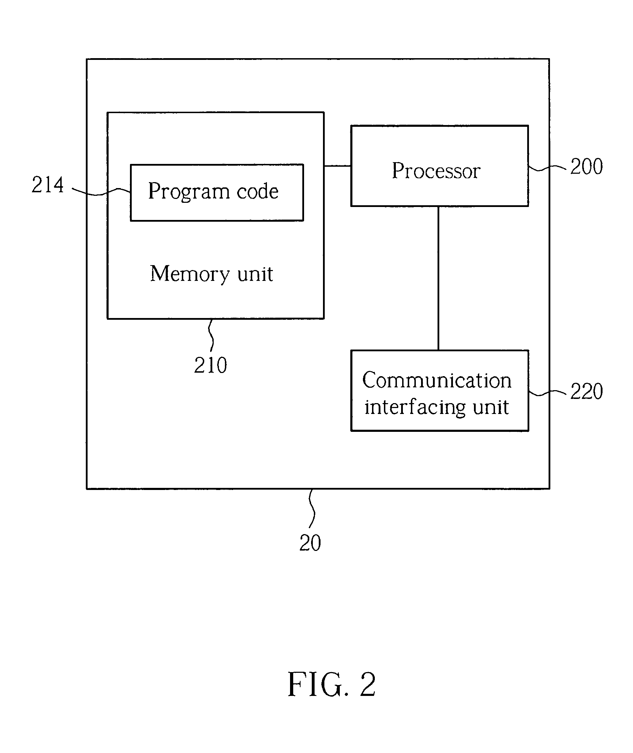

FIG. 2 is a schematic diagram of an exemplary communication device 20. The communication device 20 can be the CPNS server 120, the PN GW 140, PNEs PNE1, PNE2 and PNE3 shown in FIG.1 and may include a processor 200 such as a microprocessor or ASIC, a memory unit 210, and a communication interfacing unit 220. The memory unit 210 may be any data storage device that can store program code 214, for access by the processor 200. Examples of the memory unit 210 include but are not limited to a subscriber identity module (SIM), read-only memory (ROM), random-access memory (RAM), CD-ROMs, magnetic tapes, hard disks, and optical data storage devices. The communication interfacing unit 220 is preferably a radio transceiver for wirelessly communicating with the network according to processing results of the processor 200.

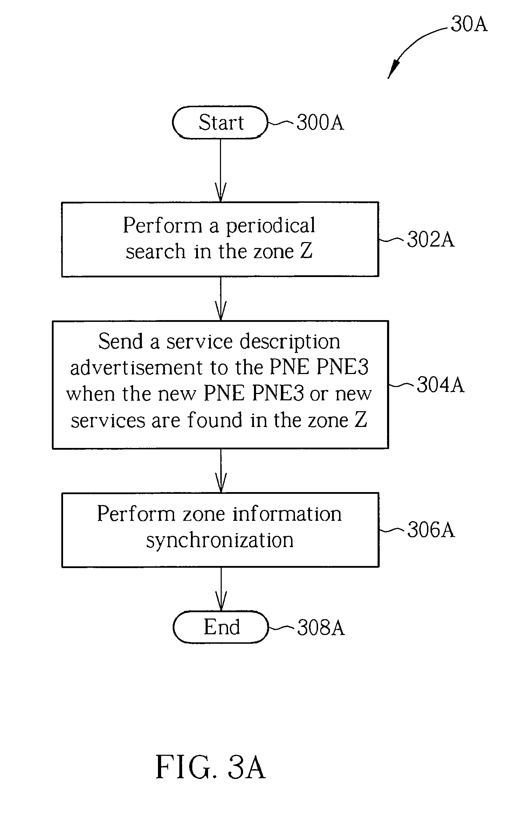

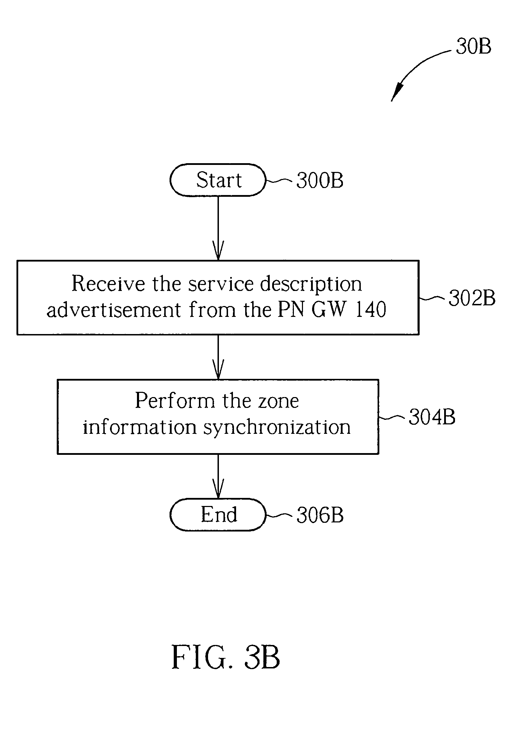

Please refer to FIGs.3A and 3B, which are flow charts of exemplary processes 30A and 30B. The process 30A is used for a zone based service procedure for the PN GW 140 shown in FIG. 1. The process 30B is used for the zone based service procedure for the new PNE PNE3 shown in FIG.1. The process 30A can be compiled into the program code 214 and include the following steps:

Step 300A: Start.

Step 302A: Perform a periodical search in the zone Z.

Step 304A: Send a service description advertisement to the PNE PNE1, PNE2 and PNE3 when the new PNE PNE3 or new services are found in the zone Z.

Step 306A: Perform zone information synchronization when the new PNE PNE3 or new services are found in the zone Z.

Step 308A: End.

The process 30B can be compiled into the program code 214 and include the following steps:

Step 300B: Start.

Step 302B: Receive the service description advertisement from the PN GW 140.

Step 304B: Perform the zone information synchronization when the new PNE PNE3 or new services are found in the zone Z.

Step 306B: End.

According to the processes 30A and 30B, the PN GW 140 performs the periodical search in the zone Z to find the new PNE (e.g. PNE3) in the zone Z. When the periodical search is done, if the new PNE (e.g. PNE3) is found or there are new services in the zone Z the PN GW 140 sends the service description advertisement to the all PNE PNE1, PNE2 and PNE3 to advertise its available services in the zone Z. In this situation, the new PNE PNE3 is aware of available services in the zone Z according to the received service description advertisement. In other words, whenever there is an update, e.g. new services or new PNE found in the zone Z, the zone information synchronization is performed.

The zone information synchronization includes the number of PNE members, a PNE member list and a service category, but not limited herein. In other words, whenever there is an update, e.g. new services or new PNE(s) inside the zone, Synchronization of Zone information, such as the number of PNE(s) Members , the PNE(s) Member lists, service category in the Zone with PN GW A and CPNS Servers is performed. When there is a new service available, all PNE inside the zone will be notified.

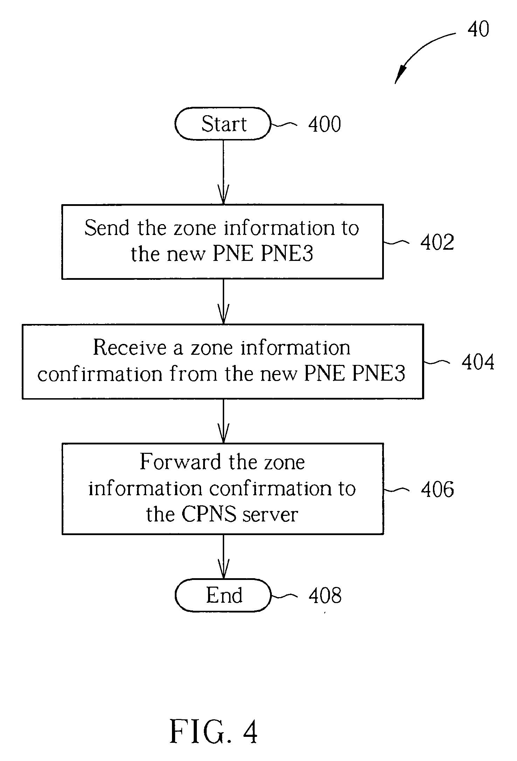

In addition, the step of performing the zone information synchronization may include more steps. Please refer to FIG. 4, which is a flow chart of an exemplary process 40. The process 40 is used for zone information synchronization for the PN GW 140 shown in FIG.1. The process 40 can be compiled into the program code 214 and include the following steps:

Step 400: Start.

Step 402: Send the zone information to the new PNE PNE3.

Step 404: Receive a zone information confirmation from the new PNE PNE3.

Step 406: Forward the zone information confirmation to the CPNS server 120.

Step 408: End.

According to the process 40, the PN GW 140 sends the zone information to the newly found PNE PNE3 which was just entering the zone Z. If the new PNE PNE3 is already notified to be in the zone Z, the new PNE PNE3 returns the zone information confirmation to the PN GW 140. The PN GW 140 receives the zone information confirmation from the new PNE PNE3 and forward the zone information confirmation to the CPNS server 120.

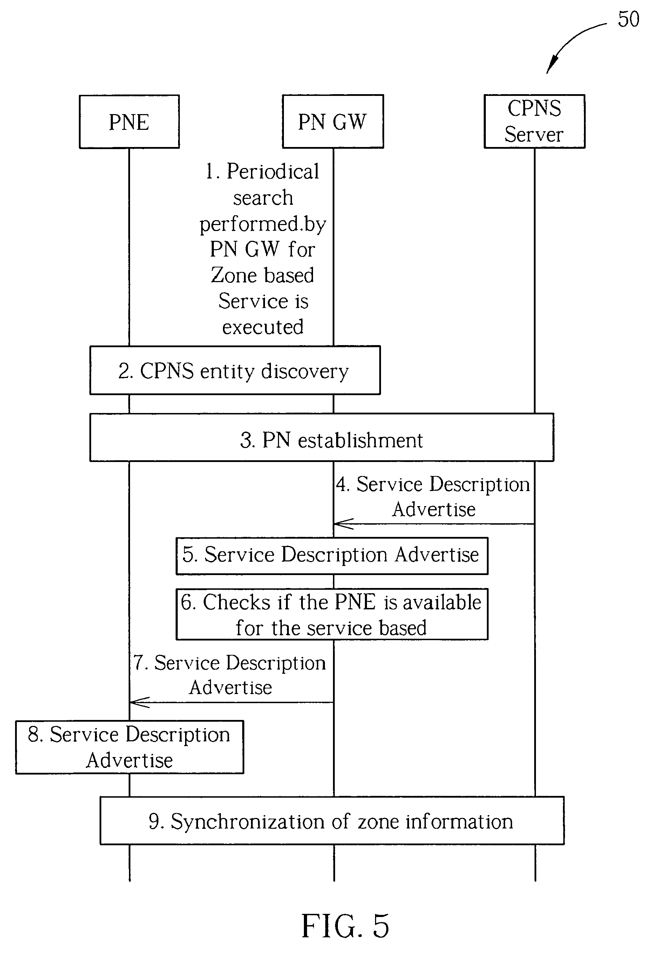

Please refer to FIG. 5, which is an exemplary sequence diagram 50 according to the processes 30A and 30B. In the step 0, the CPNS Server delivers the service description advertise message to the PN GW. This is a presumed step for the Zone Based Service, and can happen again during the following steps. In the step 1, periodical search performed by PN GW for Zone based Service is executed. In the step 2, CPNS entity discovery is executed between PNE and PN GW when there is a newly found PNE entering its zone. In the step 3, the PN establishment is executed between the newly-found PNE, PN GW, and CPNS Server. In the step 4, if there's no service description advertise sent from the CPNS server beforehand or the new service description advertise message was made, the CPNS Sever sends the service description advertise message to the PN GW. In the step 5, after receiving the service description advertise message, the PN GW stores the service description. In the step 6, the PN GW checks if the PNE is available for the service based on a PN inventory. In the step 7, the PN GW delivers the service description advertise message to the PNE. In the step 8, based on service description advertise message, PNE is aware of available services to consume in the Zone. During the period above, the PN GW shall continuously perform periodic search to find another new PNE(s) entering its zone. In the step 9, synchronization of zone information is performed.

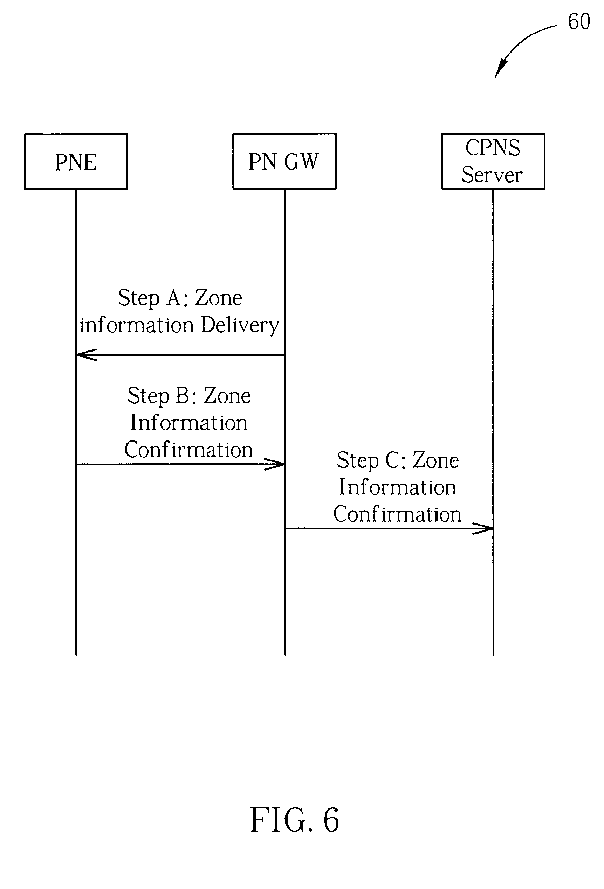

Please refer to FIG. 6, which is an exemplary sequence diagram 60 according to the process 40. In the Step A, the PN GW sends the zone information to a PNE. In the Steps B and C, the PNE is notified to be in the zone and returns the zone information confirmation to the PN GW and a CPNS server.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processing means 200 processes the program code 214 related to the abovementioned processes and the processed results can handle zone based service procedure in the personal network 10.

To sum up, when the PN GW is used for the zone based service, the PN GW performs the periodical search in a geography zone. When the periodical search is done, the PN GW sends the service description advertisement to advertise its available service if a new PNE is found or there are new services in the zone. Based on the received service description advertisement, the new PNE is notified of available services in the zone. Whenever there is an update, the zone information synchronization is performed.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling zone based service procedure for a personal network (PN) gateway in a wireless communication system, the method comprising:
performing a periodical search in a zone including a PNE;
sending a service description advertisement to the PNE when a service is newly found in the zone; and
performing zone information synchronization.

2. The method of claim 1, wherein performing the zone information synchronization comprise:
sending zone information to the PNE;
receiving a zone information confirmation from the PNE; and
forwarding the zone information confirmation to a server.

3. The method of claim 2, wherein the zone information includes the number of PNE members in the zone, a PNE member list, a service category in the zone.

4. A method of handling zone based service procedure for a personal network (PN) gateway in a wireless communication system, the method comprising:
performing a periodical search in a zone including a first PNE;
sending a service description advertisement to the first PNE and a second PNE when the second PNE is newly found in the zone; and
performing zone information synchronization.

5. The method of claim 4, wherein performing the zone information synchronization comprise:
sending zone information to the second PNE;
receiving a zone information confirmation from the second PNE; and
forwarding the zone information confirmations to a server.

6. The method of claim 5, wherein the zone information includes the number of PNE members in the zone, a PNE member list, a service category in the zone.

7. A method of handling zone based service procedure for a personal network entity (PNE) in a wireless communication system, the method comprising:
receiving a service description advertisement from a personal network gateway (PN GW); and
performing zone information synchronization.

8. The method of claim 7 further comprising being aware of available services in a zone according to the service description advertisement.

9. A communication device for handling zone based service procedure in a wireless communication system, the communication device comprising:
means for performing a periodical search in a zone including a PNE;
means for sending a service description advertisement to the PNE when a service is newly found in the zone; and
means for performing zone information synchronization.

10. The communication device of claim 9, wherein performing the zone information synchronization comprise:
means for sending zone information to the PNE;
means for receiving a zone information confirmation from the PNE; and
means for forwarding the zone information confirmation to a server.

11. A communication device for handling zone based service procedure in a wireless communication system, the communication device comprising:
means for performing a periodical search in a zone including a first PNE;
means for sending a service description advertisement to the first PNE and a second PNE when the second PNE is newly found in the zone; and
means for performing zone information synchronization.

12. The communication device of claim 11, wherein performing the zone information synchronization comprise:
means for sending zone information to the second PNE;
means for receiving a zone information confirmation from the second PNE; and
means for forwarding the zone information confirmation to a server.

13. The communication device of claim 10 or 12, wherein the zone information includes the number of PNE members in the zone, a PNE member list, a service category in the zone.

14. A communication device for handling zone based service procedure in a wireless communication system, the communication device comprising:
means for receiving a service description advertisement from a personal network gateway (PN GW); and
means for performing zone information synchronization.

15. The communication device of claim 14 further comprising being aware of available services in a zone according to the service description advertisement.
